# EUROPÄISCHE PATENTSCHRIFT

(11) **EP 2 741 897 B1**
(45) Veröffentlichungstag und Bekanntmachung des Hinweises auf die Patenterteilung: **01.07.2015**
(21) Anmeldenummer: 13720765.0
(22) Anmeldetag: 14.03.2013
(51) Int. Cl.: B29C 35/08

(54) **SET ZUM VERARBEITEN EINES LICHTHÄRTENDEN MATERIALS**
SET FOR PROCESSING A LIGHT-CURING MATERIAL
ENSEMBLE PERMETTANT DE TRAVAILLER UN MATÉRIAU PHOTODURCISSABLE

(30) Priorität: 15.03.2012 DE 202012100929 U
(43) Veröffentlichungstag der Anmeldung: 18.06.2014
(73) Patentinhaber: KDS Holding GmbH, 50389 Wesseling (DE)
(72) Erfinder: JURCEVIC, Dinko, 50968 Köln (DE)
(74) Vertreter: Rumrich, Gabriele
(86) Internationale Anmeldenummer: PCT/DE2013/100103
(87) Internationale Veröffentlichungsnummer: WO 2013/135238

(56) Entgegenhaltungen:
- EP-A2- 0 790 119
- DE-A1- 2 157 854
- DE-A1- 4 126 310
- US-A1- 2003 000 403

## Beschreibung

Die vorliegende Erfindung betrifft ein Set zum Verarbeiten eines lichthärtenden Materials.

Mittels eines Applikators oder Spenders werden bekannter Weise Materialien unterschiedlicher Viskositäten für verschiedene Zwecke dosiert. Die Materialien können flüssig oder zähflüssig sein. Der Applikator/Spender kann je nach Anwendung und Einsatzzweck manuell bedient werden.
In der Druckschriften DE 21 57 854 A1 wird eine Einrichtung zum Auftragen von flüssigem Wachs beschrieben, welches verflüssigt werden muss und wobei ein elektrisch beheiztes Handstück vorgesehen ist, über welches das flüssige Wachs ausgegeben wird. Diese Einrichtung wird beispielsweise zum Herstellen von Zahnersatz verwendet.
Die Druckschrift US 2003/00043 A1 offenbart ein Verfahren zum Herstellen eines hülsenförmigen Gummituchs, wobei Schichten des Gummituchs in axialer Produktionsrichtung aufeinanderfolgend hergestellt werden. Es erfolgt das Aufbringen eines unter Einwirkung von Strahlung aushärtbaren Polymers auf eine Hülsenbasis im Wesentlichen in Form einer Schicht und das Aushärten des aushärtbaren Polymers mittels einer separaten Strahlungsquelle.
Aus der Druckschrift EP 0 790 119 A2 ist eine Vorrichtung zum Härten und Formen von Fluid, das optisch härtbar ist, welches auch als "Rapid Prototyping" bezeichnet wird, bekannt. Es erfolgt mittels Stereolithografie das Härten eines optisch härtbaren Harzes mit Licht, um dadurch ein dreidimensionales Objekt zu erzeugen. Zuerst werden Daten eines dreidimensionalen Modells mit Hilfe von 3D-CAD zu horizontalen Schnitten verarbeitet um Daten zu erzeugen, die Querschnitten des dreidimensionalen Modells entsprechen. Dann wird ein Laserstrahl über ein Niveau (Fluidspiegel) von optisch aushärtbarem Fluidharz gemäß den Schnittdaten abgetastet. Das Harz ist derart beschaffen, dass ein Bereich, der von einem Laserstrahl getroffen wird, über eine gewisse Dicke ausgehärtet wird und mit dem Laserstrahl eine ausgehärtete Schicht gemäß den Daten über die Querschnitte des dreidimensionalen Modells gebildet. Diese Lösung ist sehr aufwendig und kann nicht dazu verwendet werden, beispielsweise mit einem Applikator auf eine Oberfläche lichtaushärtendes Material aufzutragen und dann zu formen.
Aus der Druckschrift DE 87 09 115 U1 ist ein stiftartig ausgestalteter Spender zum Auftragen eines flüssigen Rostumwandlers bekannt, der einen Ausgabeteil für die Flüssigkeit sowie eine Kappe aufweist, die abnehmbar auf den Ausgabeteil aufgesetzt werden kann. Die Kappe ist mit einer schleifend wirkenden Außenfläche versehen, mit der man lockeren Lack und Rost von einer Oberfläche entfernen kann, auf die der Rostumwandler aufgetragen werden soll. Der Ausgabeteil weist elastische Wandungen aus einem Polymerisatmaterial auf, die einen langgestreckten Behälter zur Aufnahme eines Vorrates des Rostumwandlers umschließen, sowie eine Ausgabespitze aus Polymerisatmaterial auf, die ein am Vorratsbehälter angesetztes Gehäuse mit einem Durchgang aufweist, der mit einer in den Vorratsbehälter führenden Öffnung in Verbindung steht. Ein Ventilelement im Gehäuse kann sich mit seinem Umfang dicht an eine Innenfläche desselben anlegen, die einen Endteil des Durchgangs bildet, wobei eine Spitze durch das Auslassende des Durchgangs verläuft, wenn das Ventilelement dicht an dieser Innenfläche anliegt. Eine Vorspanneinrichtung drückt das Ventilelement in den dichten Sitz auf die den Endteil des Durchganges bildende Innenfläche und erlaubt eine Bewegung des Ventilelements in eine Offenstellung, in der es von der Innenfläche beabstandet liegt, damit Rostumwandler an ihm vorbeifließen kann. Das Ventilelement lässt sich in seine Offenstellung bringen, indem man seine Spitze auf eine Fläche drückt, von der Rost entfernt werden soll und der Fluss des Rostumwandlers am offenen Ventilelement vorbei lässt sich verstärken, indem man einwärts auf die den Vorratsbehälter bildenden elastischen Wände drückt. Hat man dann eine gewünschte Menge der Flüssigkeit aufgetragen, hebt man den Spender von der Fläche ab, so dass das Ventilelement die Flüssigkeit im Behälter erneut dicht abschließt. Die Kappe kann nun auf den Ausgabeteil wieder so aufgesetzt werden, dass ein Hohlraum in ihr die Spitzenanordnung aufnimmt und schützt. Diese Lösung ist zum Auftragen von lichthärtendem Material nicht geeignet, da das lichthärtende Material meist zur Verbindung von Bauteilen verwendet wird und es daher in zahlreichen Fällen nicht gewünscht wird, dass gegen die Bauteile zum Auftragen mit einem gewissen Druck gedrückt wird, wie es bei der vorgenannten Lösung der Fall ist. Weiterhin ist keine LED vorhanden, da diese auch nicht erforderlich ist.
Ein Spender der dazu geeignet ist, fließenden flüssigen Klebstoff entweder in Form eines Filmes oder in Form einer Reihe von kleinen Punkten oder Linien abzugeben, wobei der Spender einen zusammendrückbaren Behälterkörper aufweist, der mit einem Auslass in Form einer länglichen zylindrischen Düse versehen ist, wird in DE 89 09 092.6 beschrieben. Der Spender weist eine Kontrollkappe mit einer koaxialen Hülse auf, die sich innen von der Unterseite der ebenen oberen Fläche der Kontrollkappe erstreckt und das Loch die Düse aufnimmt. Weiterhin ist die Düse mit einem Positionierzapfen versehen, der mit einer Schraubennut in der Innenfläche der Hülse derart zusammenarbeitet, dass eine Drehung der Kontrollkappe von Hand in einer Richtung um die Längsachse der Düse bewirkt, dass der Zapfen entlang der Nut in Richtung gegen dasjenige Ende der Nut wandert, welches von der ebenen oberen Fläche der Kontrollkappe entfernt liegt, wodurch die Düse in den Spender zurückgezogen wird, bis die Spitze der Düse nicht mehr über die ebene obere Fläche vorragt, wobei Drehung in der entgegen gesetzten Richtung bewirkt, dass der Zapfen entlang der Nut in Richtung gegen dasjenige Ende der Nut läuft, welches der ebenen oberen Fläche näher liegt, wodurch bewirkt wird, dass die Spitze der Düse über die ebene obere Fläche der Kontrollkappe vorragt. Die Basis der Düse ist über eine biegsame Membran an den Wänden des Behälterkörpers angebracht, um eine solche Bewegung der Düse zu ermöglichen. Wenn die Düse sich in der zurückgezogenen Position befindet, in welcher ihre Spitze nicht über die ebene obere Fläche der Kontrollkappe vorragt, wirkt diese Fläche als Ausbreit- oder Verteilwerkzeug, so dass aus der Düse austretender Klebstoff zu einem Film ausgebreitet werden kann. Wenn im Gegensatz dazu die Düse sich in ihrer vorgeschobenen Position befindet, in welcher sie gegenüber der ebenen oberen Fläche der Kontrollkappe vorragt, kann Klebstoff von der Düsenspitze in Form einer feinen Linie oder in Form einer Reihe von Punkten abgegeben werden. Der konstruktive Aufbau dieses Spenders ist relativ aufwendig. Weiterhin ist nachteilig, dass zum dichten Verschließen des Spenders eine abnehmbare Verschlusskappe erforderlich ist. Auch bei dieser Lösung ist eine LED nicht erforderlich, da hier herkömmlicher Klebstoff und kein lichthärtendes Material ausgegeben wird.

Aus einer nicht vorveröffentlichten Druckschrift DE 20 2011 109 785 U1 ist ein Set bekannt, welches wenigstens eine Dosiervorrichtung mit lichthärtendem Material aufweist, die in einem Gehäuse lösbar aufgenommen wird. Weiterhin ist eine lichtemittierende Einrichtung zum Aushärten des lichtaushärtenden Materials in Form einer LED-Lampe am Gehäuse angeordnet. Mit der Dosiervorrichtung ist eine Dosiereinrichtung zum Ausbringen des lichthärtenden Materials lösbar verbunden, wobei die Dosiereinrichtung und/oder ein Dosierkanal der Dosiereinrichtung zum Ausbringen des lichthärtenden Materials einen lösbaren Verschluss aufweist, der kappenartig ausgebildet ist und zum Ausbringen des lichthärtenden Materials abgenommen werden muss. Der Dosierkanal und die lichtemittierende Einrichtung sind an zwei gegenüberliegenden Endbereichen des Sets ausgestaltet oder vorgesehen, wobei das Gehäuse wenigstens eine Öffnung zum handgesteuerten Dosieren des lichthärtenden Materials und eine Vorrichtung zum lösbaren Aufnehmen der lichtemittierenden Einrichtung aufweist. Die Menge des ausgegebenen Materials wird dabei von der Öffnungsgröße des Dosierkanals bestimmt, in Verbindung von dem Druck, der durch die Öffnungen im Gehäuse auf die Dosiervorrichtung ausgeübt wird. Nachteilig ist dabei, dass das Reservoir in Form der Dosiervorrichtung zusätzlich von einem Gehäuse ummantelt ist. Ungünstig auf den Verarbeitungsprozess wirkt sich ebenfalls aus, dass die LED an dem dem Dosierkanal gegenüberliegenden Ende des Gehäuses angeordnet ist, da es dadurch erforderlich ist, das Set nach dem Ausbringen des lichthärtenden Materials umzudrehen und erst dann den Aushärtprozess durch Betätigen der LED zu starten. Dadurch kann es vorkommen, dass das lichthärtende Material unerwünscht verläuft, bevor es ausgehärtet wird.
Mittels einer Aushärtevorrichtung (meist in Form einer LED) werden die lichthärtenden Materialien unterschiedlicher Viskositäten für verschiedene Zwecke verarbeitet. Die Materialien können flüssig, zähflüssig, pastenförmig usw. sein. Problematisch dabei ist, dass bei der Herstellung von Fugen oder sich lang erstreckenden Modellierbereichen die Gefahr besteht, dass das Material nach Ausbringen verläuft, bzw. das Material nicht einfach zu der geforderten Form geglättet bzw. modelliert werden kann, bevor es mit der lichthärtenden LED ausgehärtet wird.

Aufgabe der vorliegenden Erfindung ist es, ein Set zum Verarbeiten eines lichthärtenden Materials zu entwickeln, welches einen einfachen konstruktiven Aufbau aufweist und es gestattet, das lichthärtende Material aus einem Applikator auszugeben und zu härten und bedarfsweise gezielt zu formen.

Die erfindungsgemäße Aufgabe wird durch ein Set mit den Merkmalen des 1. Patentanspruchs gelöst.

Vorteilhafte Ausgestaltungen ergeben sich aus den Unteransprüchen.

Das Set zum Verarbeiten eines lichthärtenden Materials, d.h. zum insbesondere handgesteuerten Abgeben eines in einem Reservoir eines Applikators enthaltenen lichthärtenden Materials, zum aushärten des Material und bedarfsweise zum Formen des Materials weist wenigstens ein Leuchtmittel zum Aushärten des durch Druckeinwirkung auf das verformbare Reservoir aus einer Austrittsöffnung des Applikators abgegebenen Materials und bedarfsweise eine Modelliervorrichtung zum Verarbeiten des abgegebenen lichthärtenden Materials auf, wobei wenigstens ein Leuchtmittel lösbar oder unlösbar an dem Applikator befestigbar ist und/oder wenigstens ein Leuchtmittel lösbar oder unlösbar an der Modelliervorrichtung befestigbar ist oder wenigstens ein Leuchtmittel zwischen dem Applikator und der Modelliervorrichtung wechselbar ist.

Durch diese Variantenvielfalt kann ein Set zur Verfügung gestellt werden, welches einem breiten Anwenderkreis gerecht wird, da die zum Aushärten des Materials dienenden Leuchtmittel sowohl an der Modelliervorrichtung als auch an dem Applikator angeordnet sein können. Damit ist es möglich, mit dem Applikator Material aufzutragen, welches anschließend durch die Modelliervorrichtung geglättet oder geformt und ausgehärtet wird oder auch gleich mit dem Applikator das Material auszuhärten.
Das Leuchtmittel ist bevorzugt in Form einer LED-Lampe ausgebildet und an dem Applikator und/oder an der Modelliervorrichtung so angeordnet, dass die LED-Lampe bei deren Betätigung in Richtung zur Austrittsöffnung des Applikators für das lichtaushärtende Material bzw. in Richtung zum ausgegebenen Material, d. h. bei Anordnung an der Modelliervorrichtung in Richtung zu deren Arbeitskante/Glättfläche, leuchtet

Dabei ist es auch möglich, die Modelliervorrichtung an dem Applikator anzuordnen.
Dies erfolgt bevorzugt so, dass eine zum Modellieren und/oder Glätten des ausgegebenen Materials dienende Arbeitskante in Richtung zur Austrittsöffnung weist.

Befindet sich auch die LED an dieser Kombination aus Applikator und Modelliervorrichtung und weist die LED in Richtung zum ausgegebenen Material, so kann in einer Arbeitsbewegung
- das Material ausgegeben,
- modelliert oder geglättet und
- ausgehärtet
werden.

Bevorzugt ist die LED-Lampe in einem LED-Gehäuse (insbesondere mit der zugehörigen Verschaltung/Elektronik/Schalter/Batterie) angeordnet und das LED-Gehäuse direkt oder mittels wenigstens eines Adapterelementes mit dem Applikator und/oder der Modelliervorrichtung verbindbar.
Das Adapterelement kann beispielsweise in Form eines Clipelementes oder eines Steckelementes ausgebildet sein oder das LED-Gehäuse kann direkt oder mittels des Adapterelementes mit dem Applikator oder der Modelliervorrichtung verschraubt sein. Bevorzugt ist das LED-Gehäuse an einem ringförmigen oder klammerförmigen Adapterelement angeordnet oder ausgebildet, wobei das ringförmige Adapterelement an dem Applikator und/oder an der Modelliervorrichtung befestigbar ist.
Weiterhin ist es möglich, dass jeweils wenigstens eine LED-Lampe mit ihrem LED-Gehäuse mit dem Applikator und/oder der Modelliervorrichtung umfangsseitig einstückig ausgebildet oder an den Applikator und/oder die Modelliervorrichtung umfangsseitig angespritzt ist.

Das Reservoir ist insbesondere in einem stiftartigen Applikator ausgebildet und zumindest bereichsweise verformbar. In dem Reservoir liegt das lichtaushärtende Material vor. Das Reservoir weist wenigstens eine erste Öffnung auf, wobei der Applikator mit einer eine Austrittsöffnung aufweisenden Ausgabeeinrichtung für das lichthärtende Material versehen ist und die Ausgabeeinrichtung mit dem Reservoir verbunden ist derart, dass das lichthärtende Material durch die erste Öffnung des Reservoirs in die Ausgabeeinrichtung ausgebbar ist.
Weiterhin ist das Reservoir über wenigstens eine Öffnung befüllbar bzw. nachfüllbar. Dazu kann die Ausgabeeinrichtung vom Reservoir lösbar sein, so dass die in Richtung zur Ausgabeeinrichtung liegende erste Öffnung des Reservoirs bei abgenommener Ausgabeeinrichtung zum Befüllen/Nachfüllen des Reservoirs dient. Es kann auch an anderen Positionen des Reservoirs eine Nachfüllöffnung vorgesehen sein. Dazu kann beispielsweise eine zweite Öffnung an dem der ersten Öffnung gegenüberliegenden Ende des Reservoirs eingebracht sein, die mittels eines Verschlusselementes verschließbar ist.
Dieses Verschlusselement kann beispielsweise durch das Adapterelement gebildet werden, wenn die LED bzw. das LED-Gehäuse an dem der Austrittsöffnung gegenüberliegenden Ende des Reservoirs befestigt wird.
Die Modelliervorrichtung weist ein Griffelement auf, mit welcher diese gehalten und entlang des ausgegebenen Materials bewegt wird. Das Griffelement ist dabei in einer Vorzugsvariante hohl ausgebildet. In dem Hohlraum des Griffelementes kann aushärtbares Material vorhanden sein, welches im Bedarfsfall zum Befüllen bzw. Auffüllen des Reservoirs des Applikators durch dessen erste Öffnung und/oder zweite Öffnung dient.

Die Modelliervorrichtung kann eine ebene Glättfläche haben, sie kann aber auch Aussparungen erhalten, die ein beliebiges Muster darstellen können. Die Glättfläche bringt das ausgegebene Material/den Kunststoff in eine Form. In dieser Form wird der Kunststoff anschließend durch die LED ausgehärtet.

Die Modellier- und Aushärtevorrichtung weist wenigstens ein Griffelement auf, eine bevorzugt auswechselbare Modelliervorrichtung und ein LED-Gehäuse zur Aufnahme von Batterien und LED oder Laser, die den Kunststoff durch eine Strahlung in einem bestimmten Wellenlängenbereich aushärten.

Die vorliegende Erfindung wird im Folgenden anhand von Zeichnungen näher erläutert. Es zeigen:
- Figur 1: eine Modelliervorrichtung 1 mit einem Griffelement und einer LED in einer Vorderansicht,
- Figur 2: eine erfindungsgemäße Modelliervorrichtung gem. Fig. 1 als Seitenansicht,
- Figur 3: vier Varianten a bis d der Gestaltung der Glättfläche der Modelliervorrichtung,
- Figur 4: vier Varianten des mit einer Modelliervorrichtung modellierten und ausgehärteten Materials M,
- Figur 5: eine dreidimensionale Darstellung eines Applikators 7 mit aufgeclipstem LED-Gehäuse 3,
- Figur 6: eine dreidimensionale Darstellung einer Modelliervorrichtung mit Griffelement und aufgeclipstem LED-Gehäuse,
- Figur 7: Seitenansicht eines Applikators 7 mit aufgeclipstem LED-Gehäuse 3 und Modelliervorrichtung zwischen LED und Ausgabeöffnung,
- Figur 8: Seitenansicht eines Applikators, an dem das LED-Gehäuse über ein ringförmiges Adapterelement an dem Ende befestigt ist, welches der Austrittsöffnung gegenüberliegt,
- Figur 9: eine Seitenansicht eines Applikators, bei welcher das Adapterelement und das LED-Gehäuse separat dargestellt sind,
- Figur 10: eine Draufsicht einer Modelliervorrichtung mit Griffelement, an dem über ein Adapterelement ein LED-Gehäuse befestigbar ist,
- Figur 11: eine Draufsicht auf einen Applikator, an dem über ein Adapterelement eine Modelliervorrichtung gegenüber der Ausgabeöffnung anbringbar ist.

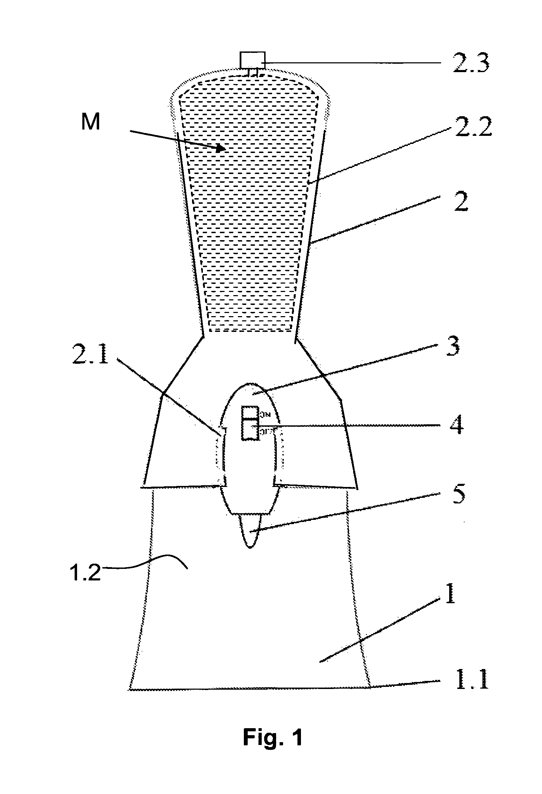

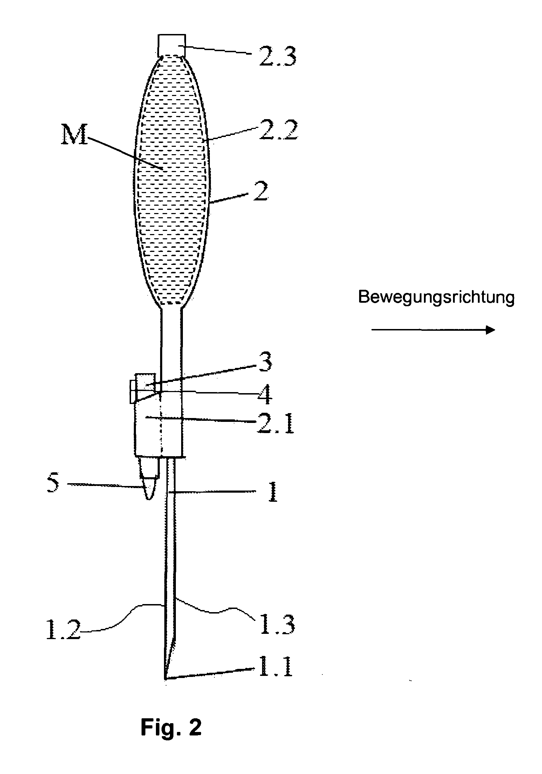

In den Figuren 1 und 2 wird eine erfindungsgemäße Modelliervorrichtung 1 gezeigt, die mit einem Griffelement 2, einem LED-Gehäuse 3, An-Aus-Schalter 4, LED 5, kombiniert ist und eine Arbeitskante bzw. Glättfläche 1.1 aufweist.

Das Griffelement 2 weist eine Aufnahme 2.1 für das Gehäuse 3 auf, die entweder lösbar oder unlösbar in der Aufnahme 2.1 sitzt. Die LED ist dabei in Richtung der Rückseite 1.2 der Modelliervorrichtung 1 angeordnet. Anstelle einer LED kann auch ein Laser in dem LED-Gehäuse angeordnet sein. Das Griffelement 2 nimmt die Modelliervorrichtung 1 auf und verjüngt sich in Richtung zu diesem. Die Modelliervorrichtung 1 kann aus einem Metall oder aus Kunststoff bestehen und ist bevorzugt plattenartig ausgebildet.
Das Griffelement 2 kann ebenfalls aus einem Metall oder aus Kunststoff bestehen. Das Material für die Modelliervorrichtung 1 wird so ausgewählt, dass es - vorzugsweise, wenigstens oder insbesondere in einem Lichtwellenlängenbereich von 300 bis 600 Nanometer (nm) - lichtundurchlässig ist, um das lichthärtbare Material, welches aus einem hier nicht dargestellten Applikator abgegeben wurde, auf der Vorderseite 1.3 der Modelliervorrichtung 1 (Seite, die der LED 5 abgewandt ist, S. Figur 2) gegen ungewolltes Aushärten durch Lichteinwirkung zu bewahren.
Wenn nun der lichthärtende Kunststoff/Klebstoff (nicht dargestellt) mittels des Applikators 7 auf eine Fläche aufgebracht wird, wird mit der Glättfläche 1.1, darübergefahren. Dabei wird der lichthärtende Kunststoff beim Passieren der Glättfläche 1.1 mittels Licht einer zum lichthärtenden Kunststoff passenden Wellenlänge, ausgehärtet.

In einer hier in Fig. 1 und 2 dargestellten Variante weist das Griffelement 2 einen Hohlraum 2.2 auf, der mittels eines Verschlusses 2.3, der der Modelliervorrichtung 1 gegenüber liegt, geöffnet und verschlossen werden kann. In dem Hohlraum befindet sich, wie hier angedeutet, lichthärtendes Material M, welches in das Reservoir eines hier nicht dargestellten Applikators gefüllt werden kann.

Fig. 2 zeigt die erfindungsgemäße Modellier- und Aushärtevorrichtung in Seitenansicht. Daraus ist ersichtlich, dass die LED 5 mit dem zugehörigen LED-Gehäuse 3 auf der Rückseite 1.2 angeordnet ist, die der Bewegungsrichtung (Pfeilrichtung) entgegen liegt. Dadurch ist gesichert, dass der Kunststoff erst aushärtet, wenn man mit der Glättfläche 1.1 darüber gefahren ist.

Die Glättfläche 1.1 der Glättvorrichtung 1 kann verschiedene Formen haben, um verschiedene Muster im lichthärtenden Material zu erzeugen.
Das LED-Gehäuse 3 oder ein Laser weist zusätzlich zur LED-Lampe 5 oder zum Laser eine Batterie (nicht dargestellt), ein Lampengehäuse (nicht dargestellt), sowie den Schalter 4 (bevorzugt Druckschalter) zum manuellen Aktivieren der LED-Lampe und weitere mechanische und elektronische Elemente auf. Es kann in dem LED-Gehäuse 3 zudem ein aktivierbares Bauteil zum Einschalten eines Dauerbetriebs der LED-Lampe enthalten sein.

Das LED-Gehäuse 3 mit der LED-Lampe 5 ist ein eigenständiges Bauteil, das in die Aufnahme 2.1 für das LED-Gehäuse 3 eingesteckt werden kann (lösbar oder unlösbar). Dies hat den Vorteil, dass alle für den Arbeitsgang der Verarbeitung des lichthärtenden Materials erforderlichen Komponenten gemeinsam in einem kompakten Set verfügbar sind und beispielsweise leicht transportiert werden können.

Das LED-Gehäuse 3 wird bevorzugt mittels einer Schnappvorrichtung mit zwei Federelementen, mit der Aufnahme 2.1 lösbar verbunden, z.B. durch Einstecken. Das LED-Gehäuse 3 kann durch einfaches Herausziehen aus dieser Schnappvorrichtung entnommen werden.

Gemäß nicht dargestellter Varianten ist es auch möglich, die Glättvorrichtung 1 und die Aufnahme 2.1 mit dem Griffelement 2 einstückig auszubilden.

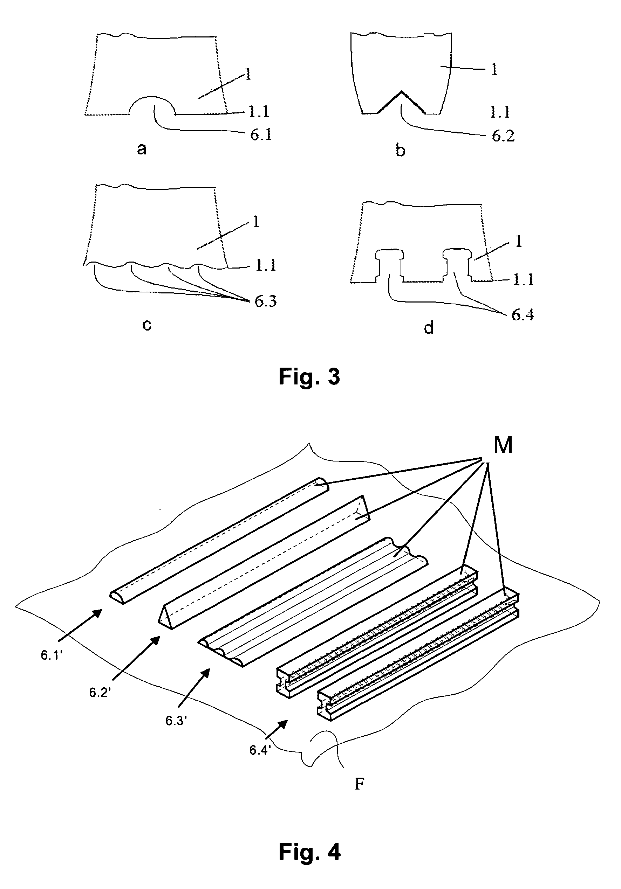

In Figur 3 werden vier Varianten a bis d der Gestaltung der Glättfläche 1.1 der Modelliervorrichtung 1 gezeigt.

In Variante a weist die Glättfläche 1.1 eine halbkreisförmige Ausnehmung 6.1 auf, so dass bei entlang ziehen der Modelliervorrichtung 1 eine sich längs der Bewegungsrichtung erstreckende Kontur mit einer entsprechenden halbkreisförmigen Wölbung aus dem Kunststoff (nicht dargestellt) gebildet wird und durch die LED ausgehärtet wird.

Gemäß Variante b ist die in der Glättfläche 1.1 vorhandene Ausnehmung 6.2 dreieckig ausgebildet. Dadurch können entlang der Bewegungsrichtung aus dem auf einem Untergrund aufgebrachten Kunststoff dreieckige Konturen erzeugt und mittels der LED ausgehärtet werden.

Mit einer Wellenform 6.3 in der Glättfläche 1.1 gemäß Darstellung c durch mehrere im Wesentlichen halbkreisförmige Ausnehmungen in der Glättfläche wird eine Wellenform hergestellt in dem Kunststoff hergestellt und mittels der LED ausgehärtet.
Alternativ könnte auch eine sägezahnartige Form in der Glättfläche vorgesehen werden (nicht dargestellt).

Eine Variante, bei welcher nebeneinander zwei Ausnehmungen 6.4 mit dem Querschnitt einer Schiene angeordnet sind, zeigt Variante d. In diesem Fall werden im Abstand zueinander zwei Spuren aus Kunststoff entsprechend einer Schiene erzeugt.
Durch darüberfahren mit der Glättvorrichtung 1 werden durch die Ausnehmungen 6.4 in der Glättfläche 1.1 zwei zueinander parallele "Wülste" in der Form einer Schiene erzeugt. Dies ist insbesondere für den Modellbau eine interessante Variante zur Erzeugung einer Schiene für Modellbahnen.

In Figur 4 ist schematisch dargestellt, welche Formen mit der Modelliervorrichtung in dem Material M auf einer Fläche F erzeugt und durch Aushärten stabilisiert werden können. Dies sind beispielsweise eine Wulst 6.1' mit halbkreisförmigen Querschnitt durch eine Modelliervorrichtung gem. Fig. 3, Darstellung a eine Wulst 6.2' mit dreieckigem Querschnitt durch eine Modelliervorrichtung gem. Fig. 3, Darstellung b, eine Wellenform 6.3' durch eine Modelliervorrichtung gem. Fig. 3, Darstellung c, Schienen 6.4' durch eine Modelliervorrichtung gem. Fig. 3, Darstellung d.

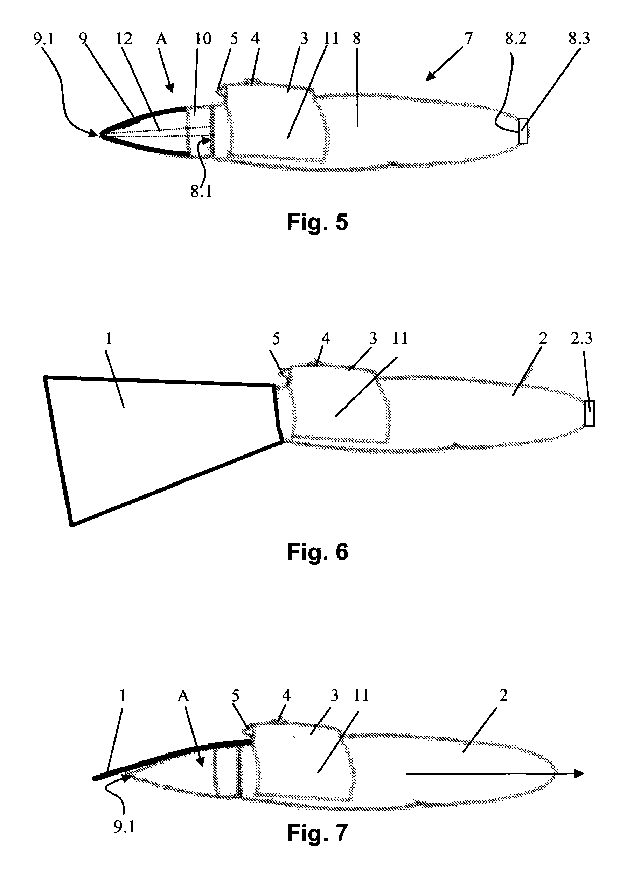

Figur 5 zeigt einen erfindungsgemäßen Applikator 7 in räumlicher Darstellung.
Ein Reservoir 8 weist ein lichthärtendes Material/Verbundmaterial (hier nicht dargestellt) auf. An das Reservoir 8 schließt sich eine Ausgabeeinrichtung A an, die sich aus einer eine Austrittsöffnung 9.1 aufweisenden Verschlusseinheit 9 und einer Aufnahmeeinheit 10 zusammensetzt. Die Verschlusseinheit 9 kann umfangsseitig einen Abschirmring aufweisen, um das lichthärtbare Material nach Austritt aus der Austrittsöffnung 9.1 gegen ungewolltes Aushärten durch Lichteinwirkung der LED-Lampe 5 zu schützen und somit eine Verstopfung des in der Ausgabeeinrichtung A vorhandenen Dosierkanals 12 während des Aushärtens des ausgebrachten lichthärtenden Materials/Verbundmaterials, wenn die Strahlung der LED-Lampe 5 das Material der Verschlusseinheit 9 zumindest im Bereich der Austrittsöffnung 9.1 durchdringen kann, zu verhindern. Besteht die Ausgabeeinrichtung A aus einem Material, welches das Licht der LED nicht durchdringt, so kann die Abschirmung entfallen, wie es hier der Fall ist.

Die LED-Lampe 5 ist in einem LED-Gehäuse 3 angeordnet und über eine Schnappvorrichtung 11 mit dem Reservoir 8 bevorzugt lösbar verbunden. Die LED-Lampe 5 leuchtet bei Betätigung in einem zur nicht dargestellten Längsachse des Applikators 7 geneigten Winkel in Richtung zur Austrittsöffnung 9.1. Ein Schalter 4, der in das LED-Gehäuse 3 integriert ist, dient zum Ein- und Ausschalten der LED-Lampe. In dem LED-Gehäuse 3 sitzen auch die erforderliche Elektronik und eine Batterie (nicht dargestellt).

Die Aufnahmeeinheit 10 und die Verschlusseinheit 9 können aus Kunststoff oder einem metallischen Werkstoff hergestellt sein.
Auch die anderen Bestandteile, wie das Reservoir 8 sind aus einem Material, welches das Licht der LED nicht durchdringen kann, um ein ungewolltes Aushärten des Materials zu verhindern.
Das Reservoir 8 ist in diesem Ausführungsbeispiel aus einem ersten Material, z.B. einem weichen Polyethylen (zum Beispiel LDPE- low density polyethylene) - hergestellt oder weist ein solches auf. Die Aufnahmeeinheit 10 ist besteht vorzugsweise aus einem zweiten Material, z.B. einem härteren Polymer, jedenfalls aber einem relativ zum ersten Material des Reservoirs härteren Material oder weist ein solches auf.

Bei einer bevorzugt umfangsseitigen Druckaufbringung auf das Reservoir 8, zum Beispiel durch manuellen Druck mit den Fingern von außen auf das verformbare Reservoir 8, wird das lichtaushärtende Material durch eine erste Öffnung 8.1 des Reservoirs 8 in die Ausgabeeinrichtung A hinein gefördert oder gepresst. Über die Aufnahmeeinheit 10 gelangt das lichthärtende Material in die Verschlusseinheit 9 und wird über diese durch einen gestrichelt schematisch angedeuteten Dosierkanal 12 durch die Austrittsöffnung 9.1 gefördert. Während dieses Vorgang kann die LED-Lampe 5 mit dem Schalter 4 betätigt werden, so dass das ausgegebene lichthärtende Material sofort ausgehärtet wird. Ein Umdrehen des Applikators zum Aushärten des ausgegebenen lichthärtenden Klebstoffs/Materials kann damit entfallen.

Dadurch, dass lediglich ein Bearbeitungsweg zum Auftragen und gleichzeitigen Aushärten erforderlich ist, wird 50% der Bearbeitungszeit eingespart im Vergleich zu Lösungen, bei welchen erst über den Bearbeitungsweg das Material aufgetragen wird und danach wiederholt über den gleichen Weg das Aushärten mittels LED erfolgt.

Nach seinem Ausbringen wird das lichthärtende Verbundmaterial, durch Licht, in diesem Ausführungsbeispiel durch LED-Licht im Lichtwellenlängenbereich zwischen 395 und 470 Nanometer (nm), ausgehärtet. Dieses LED-Licht wird durch die in die Schnappvorrichtung integrierte LED-Lampe 5 bereitgestellt, welche lösbar oder auch unlösbar auf das Reservoir 1 aufgesteckt werden kann.

Ein Auffüllen des Reservoirs 8 ist über dessen erste Öffnung 8.1 möglich, wenn die Ausgabeeinrichtung A lösbar mit dem Reservoir verbindbar ist.

Alternativ kann in dem Reservoir 8 auch eine zweite Öffnung 8.2 vorhanden sein, beispielsweise an dem der Austrittsöffnung 9.1 gegenüberliegenden Ende, wie es in Fig. 5 dargestellt ist. Die zweite Öffnung 8.2 ist mit einem Verschlusselement 8.3, welches zum Nachfüllen entfernt werden kann, versehen.

In Figur 6 ist eine Variante dargestellt, bei welcher die im Wesentlichen baugleiche Schnappvorrichtung 11, wie sie in Figur 5 mit dem Applikator 7 kombiniert ist, mit LED-Gehäuse 3 und LED-Lampe 4 auf dem Griffbereich 2 angeclipst ist, der mit einer Modelliervorrichtung 1 verbunden ist. Dadurch ist das LED-Gehäuse 3 zwischen dem Applikator 7 und dem Griffelement 2 austauschbar. Dann kann beispielsweise mit dem Applikator 7 (der keine LED aufweist oder dessen LED nicht eingeschaltet ist) zuerst das Material auf eine Fläche aufgebracht werden und anschließend das Material mit der Modelliervorrichtung 1, die kombiniert ist mit der LED 5 und dem Griffelement 2, geformt und ausgehärtet werden.

Dient das Griffelement 2 zur Aufnahme von Material, welches in das Reservoir 8 nachgefüllt werden kann, weist dieses ein Verschlusselement 2.3 auf.
Es ist vorteilhaft, wenn das Reservoir 8 und das Griffelement 2 im Wesentlichen baugleich ausgeführt sind.

Eine weitere Variante der Anwendung der Modelliervorrichtung 1 ist in Figur 7 dargestellt. In diesem Fall ist die Modelliervorrichtung 1 an einem Applikator 7 mit mittels Schnappvorrichtung 11 aufgeclipstem LED-Gehäuse 3 und zwischen LED 5 und Ausgabeöffnung 9.1 bzw. dem Bereich, in welchen das Licht der LED 5 auf eine Auflage auftrifft und Ausgabeöffnung 9.1 angeordnet.

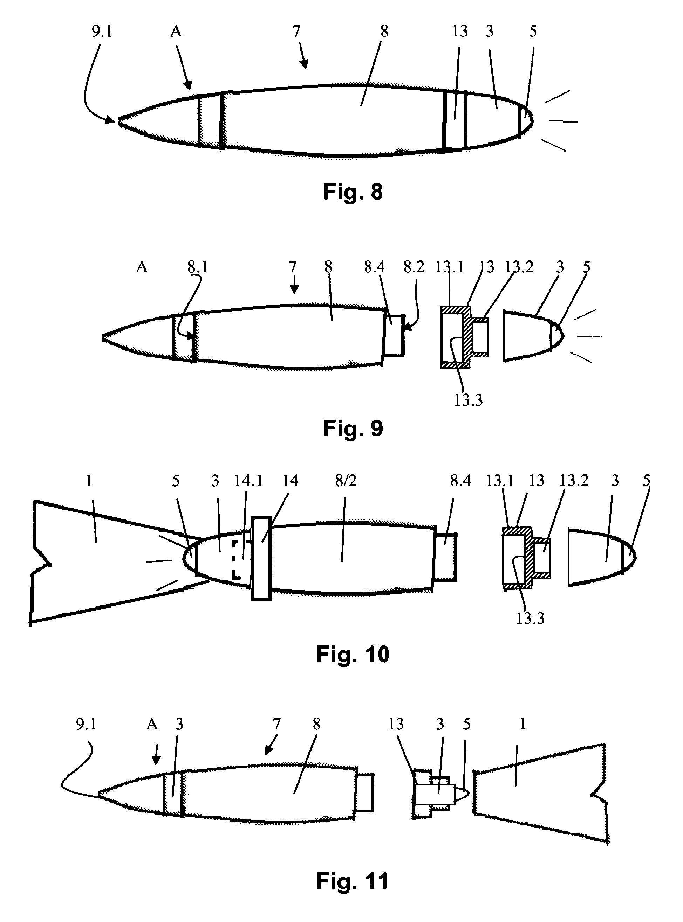

Figur 8 zeigt die Seitenansicht eines Applikators 7, an dessen Reservoir 8 das LED-Gehäuse 3 mit der darin angeordneten LED 5 (sowie Elektronik, Schalter und Batterie) über ein ringförmiges Adapterelement 13, welches im Längsschnitt gezeigt wird, an dem Ende befestigt ist, welches der Austrittsöffnung 9.1 der Ausgabeeinrichtung A gegenüberliegt.

Gemäß Figur 9 wird verdeutlicht, dass das Adapterelement 13 und das LED-Gehäuse 3 vorteilhafter Weise abnehmbar von dem Reservoir 8 des Applikators 7 sind. Das Reservoir 8 weist dazu einen durchmesserreduzierten Bereich 8.4 auf, der zur Aufnahme des Adapterelementes 13, welches zum Aufbringen auf den durchmesserreduzierten Bereich 8.4 ein erstes ringförmiges Element 13.1 aufweist. Das Adapterelement 13 weist in Richtung zum LED-Gehäuse 3 einen durchmesserreduzierten Bereich 13.2 auf, der zur Aufnahme des LED-Gehäuses dient, welches über den durchmesserreduzierten Bereich 13.2 greift. Adapterelement 13 und Reservoir 8 bzw. LED-Gehäuse 3 und Adapterelement 13 können wahlweise über eine Steckverbindung, eine Clipverbindung, eine Schraubverbindung usw. miteinender vorzugsweise lösbar fügbar sein, wobei dann selbstverständlich die dafür erforderlichen Formelemente vorzusehen sind.
In einer bevorzugten Variante ist das Adapterelement 13 im Bereich des ringförmigen Elementes 13.1 mit einem Innengewinde und der Durchmesserreduzierte Bereich 8.4 mit einem dazu korrespondierenden Außengewinde versehen, so dass das Adapterelement 13.1 auf den durchmesserreduzierten Bereich des Reservoirs aufschraubbar ist.
Der Durchmesserreduzierte Bereich 13.2 des Adapterelement 13 weist vorteilhafter Weise ein Außengewinde und das LED-Gehäuse 3 ein dazu korrespondierendes Innengewinde auf und ist somit auf das Adapterelement 13 aufschraubbar. Ein nicht bezeichneter Absatz des Adapterelementes bildet dabei einen Anschlag für das LED-Gehäuse
Das Adapterelement besitzt weiterhin eine quer verlaufende Wand bzw. einen Boden 13.3. Weist das Reservoir 8 an dem Ende, welches der Ausgabeeinrichtung A gegenüberliegt, zusätzlich zu der mit der Ausgabeeinrichtung A in Verbindung stehenden ersten Öffnung 8.1 eine zweite Öffnung 8.2 zum Befüllen/Nachfüllen mit lichthärtbarem Material auf, so dient das Adapterelement 13 zum Verschließen der zweiten Öffnung 8.2, mittels der Schraubverbindung und der Wand 13.3. Weiterhin kann die Wand 13.3 als Anlage für einen Schaltkontakt zum Betätigen der LED 5 dienen. Ist das LED-Gehäuse 3 über die Schraubverbindung zum Absatz/Anschlag des etwas beabstandet, ist der Schaltkontakt geöffnet und die LED 5 ausgeschaltet.
Wird das LED-Gehäuse 3 wie in Fig. 8 dargestellt, bis an den Anschlag des Adapterelementes geschraubt, so wird der Schaltkontakt geschlossen und die LED 5 leuchtet. Selbstverständlich kann die Schaltung auch so ausgeführt werden, dass die LED 5 bei am Anschlag befindlichem LED-Gehäuse 3 aus ist und beim Wegbewegen des LED-Gehäuses vom Adapterelement eingeschaltet wird.

Werden eine erste Öffnung 8.1 und eine zweite Öffnung 8.2 vorgesehen, kann das Reservoir symmetrisch ausgebildet sein und auch in Richtung zur Ausgabeeinrichtung A mit einer hier nicht dargestellte Durchmesserreduzierung mit Gewinde versehen werden, auf welche die Ausgabeeinrichtung A geschraubt wird, wobei diese Durchmesserreduzierung dann im Wesentlichen wie die Durchmesserreduzierung 8.4 ausgebildet ist. In diesem Fall muss durch die symmetrische Gestaltung und die gleichen Endbereiche des Reservoirs keine Einbaurichtung für das Befestigen der Ausgabeeinheit und des Adapterelementes beachtet werden und die Fertigungs- und Montagekosten reduzieren sich. Das Reservoir kann an einem beliebigen Ende mit der Ausgabeeinrichtung verbunden werden und an dem jeweils anderen Ende mit dem Adapterelement bzw. dem LED-Gehäuse.

Ist die Ausgabeeinrichtung abnehmbar, kann aus Richtung der ersten Öffnung 8.1 des Reservoirs 8 auch eine Modelliervorrichtung 1 mit dem Reservoir 8 verbunden werden (s. Fig. 10, wobei dann das Reservoir 8 praktisch als Griffelement 2 dient. An dem dem Griffelement 2 gegenüberliegenden Ende kann dann eine LED 5 im LED-Gehäuse 3 über ein Adapterelement 13 befestigt werden, die beispielsweise auch als "Ersatz LED" einsetzbar ist. An dem Reservoir 8 wird in Richtung zur Modelliervorrichtung 1 eine LED 5 im LED-Gehäuse 3 zum Aushärten des modellierten Materials angebracht, beispielsweise über einen Ring 15, an dem eine Aufnahme 14.1, die im Wesentlichen baugleich zu 13.2 ist und auch einen Anschlag aufweist, so dass das LED-Gehäuse 3 damit verbindbar ist. Die Modelliervorrichtung 1 oder ein Verschlusselement (nicht dargestellt) verschließt in diesem Fall die hier nicht dargestellte erste Öffnung des Reservoirs 8. Figur 11 zeigt eine Draufsicht auf einen Applikator 7, an dessen Reservoir 8 über ein Adapterelement 13 eine Modelliervorrichtung 1 gegenüber der Austrittsöffnung 9.1 anbringbar ist. Das LED-Gehäuse 3 mit der in Richtung zur Modelliervorrichtung 1 weisenden LED ist an dem Adapterelement angeordnet.

Die Modelliervorrichtung 1 ist vorteilhafter weise austauschbar, so dass verschiedene Konturen bzw. Formen in dem ausgegebenen Material erzeugbar sind.

### Bezugszeichenliste

- 1: Modelliervorrichtung
- 1.1: Glättfläche
- 1.2: Rückseite
- 1.3: Vorderseite
- 2: Griffelement
- 2.1: Aufnahme
- 2.2: Hohlraum
- 2.3: Verschluss/Verschlusselement
- 3: LED-Gehäuse
- 4: An-Aus-Schalter
- 5: LED

- 6.1: Ausnehmung, halbkreisförmig
- 6.2: Ausnehmung dreieckig
- 6.3: Ausnehmung in Wellenform
- 6.4: Ausnehmungen in Schienenform
- 6.1': Wulst mit halbkreisförmigen Querschnitt
- 6.2': Wulst mit dreieckigem Querschnitt
- 6.3': Wellenform
- 6.4': Schienen

- 7: Applikator
- 8: Reservoir
- 8.1: erste Öffnung
- 8.2: zweite Öffnung
- 8.3: Verschlusselement
- 8.4: durchmesserreduzierter Bereich
- 9: Verschlusseinheit
- 9.1: Austrittsöffnung
- 10: Aufnahmeeinheit
- 11: Schnappvorrichtung
- 12: Dosierkanal
- 13: Adapterelement
- 14: durchmesserreduzierter Bereich
- 15: Ring
- 14.1: Aufnahme

- A: Ausgabeeinrichtung
- M: Material

## Patentansprüche

1. Set zum Verarbeiten eines lichthärtenden Materials
- mit einem Applikator (7) zum insbesondere handgesteuerten Abgeben eines in einem Reservoir (8) des Applikators (7) enthaltenen lichthärtenden Materials (M),
- mit wenigstens einem Leuchtmittel zum Aushärten des durch Druckeinwirkung auf das Reservoir (8) aus einer Austrittsöffnung (9.1) des Applikators (7) abgegebenen Materials (M).
- bedarfsweise mit einer Modelliervorrichtung (1) zum Verarbeiten des abgegebenen lichthärtenden Materials (M),
**dadurch gekennzeichnet, dass**
- das Reservoir verformbar ist
- und dass
∘ wenigstens ein Leuchtmittel lösbar oder unlösbar an dem Applikator (7) befestigbar ist
und/oder
∘ wenigstens ein Leuchtmittel lösbar oder unlösbar an der Modelliervorrichtung (1) befestigbar ist
oder
∘ wenigstens ein Leuchtmittel zwischen dem Applikator (7) und der Modelliervorrichtung (1) wechselbar ist.

2. Set nach Anspruch 1, **dadurch gekennzeichnet, dass** das Leuchtmittel in Form einer LED (5) oder eines Lasers ausgebildet ist und dass das Leuchtmittel an dem Applikator (7) und/oder an der Modelliervorrichtung (1) so angeordnet ist, dass es bei dessen Betätigung in Richtung zur Austrittsöffnung (9.1) der Ausgabeeinrichtung (A) bzw. in Richtung zum ausgegebenen Material (M) leuchtet.

3. Set nach Anspruch 1 oder 2, **dadurch gekennzeichnet, dass** die Modelliervorrichtung (1) an dem Applikator (7) angeordnet ist.

4. Set nach einem der Ansprüche 1 bis 3, **dadurch gekennzeichnet, dass** die Modelliervorrichtung (1) an dem Applikator (7) so angeordnet ist, dass eine zum Modellieren und/oder Glätten des ausgegebenen Materials (M) dienende Kante in Richtung zur Austrittsöffnung (9.1) weist.

5. Set nach einem der Ansprüche 1 bis 4, **dadurch gekennzeichnet, dass** das Leuchtmittel in einem LED-Gehäuse (3) angeordnet ist und das LED-Gehäuse (3) direkt oder mittels wenigstens eines Adapterelementes (13) mit dem Applikator (7) und/oder der Modelliervorrichtung (1) verbindbar ist.

6. Set nach Anspruch 5, **dadurch gekennzeichnet, dass** das Adapterelement (13) in Form eines Clipelementes oder eines Steckelementes ausgebildet ist oder dass das LED-Gehäuse (3) direkt oder mittels des Adapterelementes (13) mit dem Applikator (7) oder der Modelliervorrichtung (1) verschraubt ist.

7. Set nach Anspruch 5, **dadurch gekennzeichnet, dass** das LED-Gehäuse (3) an einem ringförmigen Adapterelement angeordnet oder ausgebildet ist, wobei das ringförmige Adapterelement (13) an dem Applikator (7) und/oder an der Modelliervorrichtung (1) befestigbar ist.

8. Set nach einem der Ansprüche 1 bis 7, **dadurch gekennzeichnet, dass** jeweils wenigstens eine LED-Lampe mit ihrem LED-Gehäuse (3) mit dem Applikator (7) und/oder der Modelliervorrichtung (1) umfangsseitig einstückig ausgebildet oder an den Applikator (7) und/oder die Modelliervorrichtung (1) umfangsseitig angespritzt ist.

9. Set nach einem der Ansprüche 1 bis 8, **dadurch gekennzeichnet, dass** das Reservoir (8) in einem stiftartigen Applikator (7) ausgebildet und zumindest bereichsweise verformbar ist und in dem Reservoir (8) das lichthärtende Material (M) vorliegt und wobei das Reservoir (8) wenigstens eine erste Öffnung (8.1) aufweist, und wobei der Applikator (7) mit einer eine Austrittsöffnung (9.1) aufweisenden Ausgabeeinrichtung (A) für das lichthärtende Material versehen ist und die Ausgabeeinrichtung (A) mit dem Reservoir (8) verbunden ist derart, dass das lichthärtende Material (M) durch die erste Öffnung (8.1) des Reservoirs (8) in die Ausgabeeinrichtung (A) ausgebbar ist.

10. Set nach einem der Ansprüche 1 bis 9, **dadurch gekennzeichnet, dass** das Reservoir (8) wenigstens eine Öffnung zu dessen Befüllen/Nachfüllen aufweist.

11. Set nach einem der Ansprüche 1 bis 10, **dadurch gekennzeichnet, dass** die Ausgabeeinrichtung (A) vom Reservoir (8) lösbar ist und dass die in Richtung zur Ausgabeeinrichtung (A) liegende erste Öffnung (8.1) des Reservoirs (8) bei abgenommener Ausgabeeinrichtung (A) zum Befüllen/Nachfüllen des Reservoirs (8) dient und/oder dass das Reservoir (8) eine zweite Öffnung (8.2) zum Befüllen/Nachfüllen aufweist, wobei die zweite Öffnung (8.2) an dem der ersten Öffnung (8.1) gegenüberliegenden Ende des Reservoirs (8) angeordnet ist und mittels eines Verschlusselementes (8.3) verschließbar ist.

12. Set nach einem der Ansprüche 1 bis 11, **dadurch gekennzeichnet, dass** das Verschlusselement (8.3) durch das Adapterelement (13) gebildet wird.

13. Set nach einem der Ansprüche 1 bis 12, **dadurch gekennzeichnet, dass** die Modelliervorrichtung (1) ein Griffelement (2) aufweist, welches hohl ausgebildet ist und aushärtbares Material (M) aufweist.

14. Set nach Anspruch 13, **dadurch gekennzeichnet, dass** das im Griffelement (2) der Modelliervorrichtung (1) aufgenommene Material (M) zum Befüllen/Nachfüllen des in dem stiftartigen Applikator (7) ausgebildeten Reservoirs (8) durch dessen erste Öffnung (8.1) und/oder zweite Öffnung (8.2) dient.

## Claims

1. Set for processing a light-curing material
- with an applicator (7), for dispensing, in particular in a manually controlled manner, a light-curing material (M) contained in a reservoir (8) of the applicator (7),
- with at least one lighting means for curing the material (M) dispensed from an outlet opening (9.1) of the applicator (7) by the effect of pressure on the reservoir (8),
- if required with a modelling device (1) for processing the dispensed light-curing material (M),
**characterized in that**
- the reservoir is deformable
- and **in that**
∘ at least one lighting means can be fastened detachably or undetachably to the applicator (7),
and/or
∘ at least one lighting means can be fastened detachably or undetachably to the modelling device (1),
or
∘ at least one lighting means can be exchanged between the applicator (7) and the modelling device (1).

2. Set according to Claim 1, **characterized in that** the lighting means is designed in the form of an LED (5) or a laser and **in that** the lighting means is arranged on the applicator (7) and/or on the modelling device (1) in such a way that it lights up when it is actuated in the direction of the outlet opening (9.1) of the dispensing device (A) or in the direction of the discharged material (M).

3. Set according to Claim 1 or 2, **characterized in that** the modelling device (1) is arranged on the applicator (7).

4. Set according to one of Claims 1 to 3, **characterized in that** the modelling device (1) is arranged on the applicator (7) in such a way that an edge serving for the modelling and/or smoothing of the discharged material (M) faces in the direction of the outlet opening (9.1).

5. Set according to one of Claims 1 to 4, **characterized in that** the lighting means is arranged in an LED housing (3) and the LED housing (3) can be connected to the applicator (7) and/or the modelling device (1) directly or by means of at least one adapter element (13).

6. Set according to Claim 5, **characterized in that** the adapter element (13) is designed in the form of a clip-on element or a plug-in element-or **in that** the LED housing (3) is screwed to the applicator (7) or the modelling device (1) directly or by means of the adapter element (13).

7. Set according to Claim 5, **characterized in that** the LED housing (3) is arranged or formed on an annular adapter element, the annular adapter element (13) being able to be fastened to the applicator (7) and/or to the modelling device (1).

8. Set according to one of Claims 1 to 7, **characterized in that** in each case at least one LED lamp with its LED housing (3) is peripherally formed in one piece with the applicator (7) and/or the modelling device (1) or is peripherally moulded onto the applicator (7) and/or the modelling device (1).

9. Set according to one of Claims 1 to 8, **characterized in that** the reservoir (8) is formed in a pin-like applicator (7) and at least in certain regions is deformable, and the light-curing material (M) is located in the reservoir (8), and the reservoir (8) having at least a first opening (8.1), and the applicator (7) being provided with a discharge device (A) for the light-curing material, having an outlet opening (9.1), and the discharge device (A) being connected to the reservoir (8) in such a way that the light-curing material (M) can be discharged into the discharge device (A) through the first opening (8.1) of the reservoir (8).

10. Set according to one of Claims 1 to 9, **characterized in that** the reservoir (8) has at least one opening for its filling/refilling.

11. Set according to one of Claims 1 to 10, **characterized in that** the discharge device (A) is detachable from the reservoir (8) and **in that** the first opening (8.1) of the reservoir (8), lying in the direction of the discharge device (A), serves for the filling/refilling of the reservoir (8) when the discharge device (A) has been removed and/or **in that** the reservoir (8) has a second opening (8.2) for filling/refilling, the second opening (8.2) being arranged at the end of the reservoir (8) opposite from the first opening (8.1) and able to be closed by means of a closure element (8.3).

12. Set according to one of Claims 1 to 11, **characterized in that** the closure element (8.3) is formed by the adapter element (13).

13. Set according to one of Claims 1 to 12, **characterized in that** the modelling device (1) has a grip element (2), which is of a hollow form and comprises curable material (M).

14. Set according to Claim 13, **characterized in that** the material (M) held in the grip element (2) of the modelling device (1) serves for the filling/refilling of the reservoir (8) formed in the pin-like applicator (7) through its first opening (8.1) and/or second opening (8.2).

## Revendications

1. Ensemble de traitement d'un matériau photodurcissable, présentant
un applicateur (7) qui délivre, en particulier manuellement, un matériau (M) photodurcissable contenu dans un réservoir (8) de l'applicateur (7),
au moins un moyen d'éclairage qui durcit le matériau (M) délivré par une ouverture de sortie (9.1) de l'applicateur (7) en appliquant une pression sur le réservoir (8)
si nécessaire, un ensemble de façonnage (1) qui traite le matériau photodurcissable (M) délivré, **caractérisé en ce que**
le réservoir est déformable et
**en ce qu'**au moins un moyen d'éclairage peut être fixé de manière libérable ou non libérable sur l'applicateur (7), et/ou au moins un moyen d'éclairage peut être fixé de manière libérable ou non libérable sur l'ensemble de façonnage (1) ou
**en ce qu'**au moins un moyen d'éclairage peut être échangé entre l'applicateur (7) et l'ensemble de façonnage (1).

2. Ensemble selon la revendication 1, **caractérisé en ce que** le moyen d'éclairage présente la forme d'une LED (5) ou d'un laser et **en ce que** le moyen d'éclairage est disposé sur l'applicateur (7) et/ou sur l'ensemble de façonnage (1) de telle sorte que lorsqu'il est actionné, il éclaire en direction de l'ouverture de sortie (9.1) du dispositif de sortie (A) ou en direction du matériau (M) délivré.

3. Ensemble selon les revendications 1 ou 2, **caractérisé en ce que** l'ensemble de façonnage (1) est disposé sur l'applicateur (7).

4. Ensemble selon l'une des revendications 1 à 3, **caractérisé en ce que** l'ensemble de façonnage (1) est disposé sur l'applicateur (7) de telle sorte qu'un bord qui sert au façonnage et/ou au lissage du matériau (M) délivré est tourné en direction de l'ouverture de sortie (9.1).

5. Ensemble selon l'une des revendications 1 à 4, **caractérisé en ce que** le moyen d'éclairage est disposé dans un boîtier (3) de LED et **en ce que** le boîtier (3) de LED peut être relié directement ou au moyen d'au moins un élément d'adaptateur (13) à l'applicateur (7) et/ou à l'ensemble de façonnage (1).

6. Ensemble selon la revendication 5, **caractérisé en ce que** l'élément d'adaptateur (13) présente la forme d'un élément à pince ou d'un élément enfichable ou **en ce que** le boîtier (3) de LED peut être vissé directement ou au moyen de l'élément d'adaptateur (13) sur l'applicateur (7) ou sur l'ensemble de façonnage (1).

7. Ensemble selon la revendication 5, **caractérisé en ce que** le boîtier (3) de LED est disposé ou formé sur un élément d'adaptateur annulaire, l'élément d'adaptateur annulaire (13) pouvant être fixé sur l'applicateur (7) et/ou sur l'ensemble de façonnage (1).

8. Ensemble selon l'une des revendications 1 à 7, **caractérisé en ce qu'**au moins une lampe LED est formée d'un seul tenant avec son boîtier (3) de LED à la périphérie de l'applicateur (7) et/ou de l'ensemble de façonnage (1) ou est moulé par injection à la périphérie de l'applicateur (7) et/ou de l'ensemble de façonnage (1).

9. Ensemble selon l'une des revendications 1 à 8, **caractérisé en ce que** le réservoir (8) est formé sous la forme d'un applicateur (7) en forme de tige et est déformable au moins partiellement, le matériau photodurcissable (M) étant repris dans le réservoir (8) et le réservoir (8) présentant au moins une première ouverture (8.1), l'applicateur (7) étant doté d'un dispositif de sortie (A) du matériau photodurcissable présentant une ouverture de sortie (9.1), le dispositif de sortie (A) étant raccordé au réservoir (8) de telle sorte que le matériau photodurcissable (M) puisse être délivré dans le dispositif de sortie (A) depuis la première ouverture (8.1) du réservoir (8).

10. Ensemble selon l'une des revendications 1 à 9, **caractérisé en ce que** le réservoir (8) présente au moins une ouverture permettant son remplissage.

11. Ensemble selon l'une des revendications 1 à 10, **caractérisé en ce que** le dispositif de sortie (A) peut être séparé du réservoir (8) et **en ce que** la première ouverture (8.1) du réservoir (8) située en direction du dispositif de sortie (A) sert à remplir le réservoir (8) lorsque le dispositif de sortie (A) a été enlevé et/ou **en ce que** le réservoir (8) présente une deuxième ouverture (8.2) pour remplissage, la deuxième ouverture (8.1) étant disposée à l'extrémité du réservoir (8) opposée à la première ouverture (8.1) et pouvant être fermée au moyen d'un élément de fermeture (8.3).

12. Ensemble selon l'une des revendications 1 à 11, **caractérisé en ce que** l'élément de fermeture (8.3) est formé par l'élément d'adaptateur (13).

13. Ensemble selon l'une des revendications 1 à 12, **caractérisé en ce que** l'ensemble de façonnage (1) présente un élément de saisie (2) creux et présentant le matériau durcissable (M).

14. Ensemble selon la revendication 13, **caractérisé en ce que** le matériau (M) repris dans l'élément de saisie (2) de l'ensemble de façonnage (1) sert à remplir le réservoir (8) formé dans l'applicateur (7) en forme de tige par sa première ouverture (8.1) et/ou sa deuxième ouverture (8.2).
